# EUROPÄISCHE PATENTANMELDUNG

(11) **EP 4 675 124 A1**
(43) Veröffentlichungstag der Anmeldung: **07.01.2026**
(21) Anmeldenummer: 25176244.9
(22) Anmeldetag: 14.05.2025
(51) Int. Cl.: F16F 9/18, F16F 9/32

(54) **DÄMPFER MIT BYPASS, VERFAHREN ZUR HERSTELLUNG DES DÄMPFERS**

(30) Priorität: 01.07.2024 DE 102024118559
(71) Anmelder: Stabilus GmbH, 56070 Koblenz (DE)
(72) Erfinder: Probst, Ulrich, 56204 Hillscheid (DE); Löhken, Lars, 53545 Linz am Rhein (DE); Stumpf, Till, 56242 Nordhofen (DE)
(74) Vertreter: Höer, Daniela

(57) **Zusammenfassung**

Die Erfindung betrifft einen Dämpfer (100) umfassend ein mit einer Dämpfflüssigkeit gefülltes Druckrohr (110); einen in dem Druckrohr (110) entlang einer Hubachse (H) verschieblich gelagerten Kolben (120), wobei der Kolben (120) das Druckrohr (110) in eine vordere Kammer (111) entlang der Hubachse (H) vor dem Kolben (120) und eine hintere Kammer (112) entlang der Hubachse (H) hinter dem Kolben (120) teilt; eine an dem Kolben (120) befestigte Kolbenstange (130), wobei die Kolbenstange (130) durch die hintere Kammer (112) entlang der Hubachse (H) aus dem Druckrohr (110) herausgeführt ist; und einen außerhalb des Druckrohrs (110) angeordneten Bypass (140), wobei der Bypass (140) die vordere Kammer (111) für die Dämpfflüssigkeit leitend mit der hinteren Kammer (112) verbindet. Der Bypass (140) ist zumindest abschnittsweise von einer Bypass-Wand (141) begrenzt, wobei die Bypass-Wand (141) zur Aufnahme eines von der Kolbenstange (130) bei einem Einschieben der Kolbenstange (130) in das Druckrohr (110) verdrängten Volumens der Dämpfflüssigkeit in den Bypass (140) elastisch verformbar ist.

## Beschreibung

### Technisches Gebiet

Die Erfindung betrifft einen Dämpfer umfassend ein mit einer Dämpfflüssigkeit gefülltes Druckrohr; einen in dem Druckrohr entlang einer Hubachse verschieblich gelagerten Kolben, wobei der Kolben das Druckrohr in eine vordere Kammer entlang der Hubachse vor dem Kolben und eine hintere Kammer entlang der Hubachse hinter dem Kolben teilt; eine an dem Kolben befestigte Kolbenstange, wobei die Kolbenstange durch die hintere Kammer entlang der Hubachse aus dem Druckrohr herausgeführt ist; und einen außerhalb des Druckrohrs angeordneten Bypass, wobei der Bypass die vordere Kammer für die Dämpfflüssigkeit leitend mit der hinteren Kammer verbindet.

Die Erfindung betrifft außerdem ein Verfahren zur Herstellung des Dämpfers.

### Stand der Technik

Aus der Druckschrift US 2019/106849 A1 ist ein hydraulischer Dämpfer bekannt, dessen Druckrohr als Doppelrohr ausgebildet ist. Zwischen den Wandungen des Doppelrohrs kann ein Hydrauliköl aus einer vorderen Kammer des Druckrohrs vor dem Kolben des Dämpfers in eine hintere Kammer des Druckrohrs hinter dem Kolben strömen. Damit die durch die hintere Kammer aus dem Dämpfer herausgeführte Kolbenstange des Dämpfers in das Druckrohr einfahren kann, muss das Druckrohr oder der Raum zwischen den Wandungen zusätzlich zu dem Hydrauliköl ein kompressibles Gas enthalten. Das Gas darf sich jedoch nicht in der vorderen Kammer ansammeln oder das Hydrauliköl aufschäumen, weil dadurch die Dämpfwirkung des Dämpfers beeinträchtigt würde. Folglich muss der Dämpfer in einer Ausrichtung mit der hinteren Kammer über der vorderen Kammer gehalten werden und darf keinen zu starken Bewegungen oder Erschütterungen ausgesetzt werden. Auch zu schnelle Bewegungen des Kolbens in dem Dämpfer müssen vermieden werden, weil sie zu einem Aufschäumen führen könnten. Somit sind die Einsatzmöglichkeiten des Dämpfers aus US 2019/106849 A1 begrenzt.

Der in der Druckschrift DE 33 21 680 A1 beschriebene hydraulische Dämpfer umfasst ebenfalls ein als Doppelrohr ausgebildetes Druckrohr. Hier dient der Zwischenraum zwischen den Wandungen des Druckrohrs nur als Ausgleichsraum, der das kompressible Gas und einen Teil des Hydrauliköls enthält. Dadurch wird die Gefahr des Aufschäumens verringert, aber der Dämpfer muss dennoch in einer bestimmten Ausrichtung gehalten werden, damit das Gas nicht in die vordere Kammer gelangt. Außerdem muss der Kolben des Dämpfers gemäß DE 33 21 680 A1 einen Bypass aufweisen, damit das Hydrauliköl von der vorderen in die hintere Kammer gelangen kann. Somit ist ein komplex aufgebauter Kolben erforderlich.

Die Druckschriften DE 42 12 078 A1 und DE 22 45 258 A1 offenbaren einen hydraulischen Dämpfer, der einen an einer Außenseite des Druckrohrs des Dämpfers angeordneten Ausgleichsraum umfasst, der von einer elastischen Hülle begrenzt ist. Dadurch kann der Dämpfer gemäß DE 42 12 078 A1 und DE 22 45 258 A1 vollständig mit Hydrauliköl gefüllt sein, sodass die durch ein zusätzlich enthaltenes Gas verursachten Probleme nicht auftreten. Jedoch benötigen auch diese Dämpfer einen Bypass im Inneren seines Druckrohrs, damit das Hydrauliköl von der vorderen in die hintere Kammer gelangen kann, was die Herstellung des Dämpfers verkompliziert. Darüber hinaus erschwert es ein Bypass im Inneren des Druckrohrs, ein Blockieren des Dämpfers bei einer hohen Einschubgeschwindigkeit der Kolbenstange zu realisieren. Ein solches Blockieren ist beispielsweise für eine Verwendung des Dämpfers als Dämpfer einer Fahrbahnschwelle gemäß US 2019/106849 A1 oder gemäß der Druckschrift DE 10 2020 109 215 A1 notwendig.

### Technische Aufgabe

Die Aufgabe der Erfindung ist es, einen einfach aufgebauten Dämpfer zu schaffen, der vielseitig, insbesondere unabhängig von einer Ausrichtung des Dämpfers und/oder für einen großen Bereich einer Bewegungsgeschwindigkeit des Kolbens im Druckrohr des Dämpfers, eingesetzt werden kann.

### Technische Lösung

Die vorliegende Erfindung stellt einen Dämpfer gemäß Anspruch 1 bereit, der die technische Aufgabe löst. Ebenso wird die Aufgabe durch ein Verfahren zur Herstellung des Dämpfers gemäß Anspruch 18 gelöst. Vorteilhafte Ausgestaltungen sind Gegenstand der abhängigen Ansprüche.

Der Dämpfer umfasst mindestens ein mit einer Dämpfflüssigkeit gefülltes Druckrohr. Die Dämpfflüssigkeit ist beispielsweise ein Hydrauliköl. Das Druckrohr ist beispielsweise hohlzylindrisch und/oder besteht aus einem Metall, insbesondere aus einem Stahl.

Der Dämpfer umfasst mindestens einen in dem Druckrohr entlang einer Hubachse verschieblich gelagerten Kolben. Der Kolben ist beispielsweise zylindrisch und/oder besteht aus einem Metall, insbesondere aus einem Stahl. Die Hubachse ist beispielsweise koaxial zu dem Kolben und/oder zu dem Druckrohr.

Der Kolben teilt das Druckrohr in mindestens eine vordere Kammer entlang der Hubachse vor dem Kolben und mindestens eine hintere Kammer entlang der Hubachse hinter dem Kolben. Vorzugsweise trennt der Kolben die vordere Kammer für das Dämpfungsfluid dicht von der hinteren Kammer. Der Kolben trägt vorzugsweise mindestens ein Dichtelement, das den Kolben zu einer Innenseite einer um die Hubachse umlaufenden Mantelwand des Kolbens abdichtet.

Der Dämpfer umfasst mindestens eine an dem Kolben befestigte Kolbenstange, wobei die Kolbenstange durch die hintere Kammer entlang der Hubachse, beispielsweise koaxial zu der Hubachse, aus dem Druckrohr herausgeführt ist. Die Kolbenstange ist vorzugsweise durch mindestens eine Führungs-Dichtungs-Einheit aus dem Druckrohr herausgeführt, wobei die Führungs-Dichtungs-Einheit die Kolbenstange entlang der Hubachse führt und das Druckrohr für die Dämpfflüssigkeit dicht verschließt.

Der Dämpfer umfasst mindestens einen außerhalb des Druckrohrs angeordneten Bypass, wobei der Bypass die vordere Kammer für die Dämpfflüssigkeit leitend mit der hinteren Kammer verbindet. Der Bypass erlaubt es vorteilhafterweise, dass die von dem Kolben verdrängte Dämpfflüssigkeit abhängig von einer Bewegungsrichtung des Kolbens von der vorderen Kammer in die hintere Kammer oder von der hinteren Kammer in die vordere Kammer strömen kann.

Somit ermöglicht der Bypass eine Verschiebung des Kolbens entlang der Hubachse.

Der Bypass ist zumindest abschnittsweise von einer Bypass- Wand begrenzt, wobei die Bypass-Wand zur Aufnahme eines von der Kolbenstange bei einem Einschieben der Kolbenstange in das Druckrohr verdrängten Volumens der Dämpfflüssigkeit in den Bypass elastisch verformbar ist.

Der Bypass ist vorzugsweise abschnittsweise von einer um die Hubachse umlaufenden Mantelwand des Druckrohrs begrenzt ist. Durch die Verwendung der Mantelwand zur Begrenzung des Bypass wird zusätzliches Material zur Begrenzung des Bypass eingespart.

### Vorteilhafte Wirkungen

Durch die elastische Verformbarkeit der Bypass-Wand kann der Bypass das bei dem Einschieben der Kolbenstange in das Druckrohr verdrängte Volumen der Dämpfflüssigkeit aufnehmen, sodass die Kolbenstange eingeschoben werden kann, ohne dass der Dämpfer dafür ein kompressibles Gas oder andere Maßnahmen zum Volumenausgleich enthalten müsste. Das Druckrohr und der Bypass können somit vollständig mit der Dämpfflüssigkeit gefüllt sein, sodass keine Gefahr besteht, dass sich ein Gas in der vorderen Kammer sammelt oder die Dämpfflüssigkeit aufschäumt. Der Dämpfer ist somit besonders vielseitig, insbesondere unabhängig von seiner Ausrichtung und für einen großen Geschwindigkeitsbereich einer mit dem Dämpfer zu dämpfenden Bewegung einsetzbar.

Die Bypass-Wand ist nahezu über ihre gesamte Länge an die Mantelwand des Druckrohrs direkt oder indirekt anlegbar und bildet eine Außenwand des Dämpfers. Dadurch, dass der Bypass sowohl die Funktion des Volumenausgleichs als auch die Funktion der Verbindung der vorderen Kammer mit der hinteren Kammer bereitstellt, sind für diese Funktionen keine weiteren Komponenten notwendig, sodass der Dämpfer, insbesondere der Kolben des Dämpfers, besonders einfach aufgebaut sein kann.

Die genannten Vorteile sind besonders wichtig, wenn der Dämpfer als Dämpfer einer Fahrbahnschwelle gemäß US 2019/106849 A1 oder gemäß der Druckschrift DE 10 2020 109 215 A1 verwendet wird. Bei dieser Verwendung ist Gas in dem Dämpfer besonders problematisch, weil je nach Fahrgeschwindigkeit von über die Fahrbahnschwelle fahrenden Fahrzeugen Bewegungen der Fahrbahnschwelle in einem großen Geschwindigkeitsbereich gedämpft werden müssen. Weiterhin ist es durch den Einbauort des Dämpfers unter der Fahrbahnschwelle besonders aufwendig, Gas, das sich in der vorderen Kammer gesammelt hat, durch ein vollständiges Einschieben der Kolbenstange aus der vorderen Kammer zu entfernen.

### Beschreibung der Ausführungsarten

Die Bypass-Wand ist vorzugsweise von mindestens einem Schlauch gebildet. Als Schlauch lässt sich die Bypass-Wand besonders einfach realisieren.

Das Druckrohr ist vorzugsweise in dem Schlauch angeordnet, sodass der Bypass zwischen der Mantelwand und dem Schlauch verläuft. Das Druckrohr liegt beispielsweise koaxial in dem Schlauch. Auf diese Weise kann der Bypass besonders einfach und materialsparend erzeugt werden, beispielsweise indem der Schlauch über das Druckrohr gezogen und an den Enden des Schlauchs dichtend an der Mantelwand befestigt wird. Damit die Dämpfflüssigkeit aus der vorderen Kammer und aus der hinteren Kammer in den Bypass strömen kann, kann das Druckrohr eine Anzahl von Öffnungen durch die Mantelwand aufweisen.

Durch die Anordnung des Druckrohrs in dem Schlauch kann der Schlauch, welches die Außenwand bildet, das Druckrohr vorteilhaferweise schützen, beispielsweise vor mechanischen und/oder chemischen Belastungen, insbesondere in einer korrosiven Umgebung. Eine korrosive Umgebung kann beispielsweise bei einer Verwendung des Dämpfers unter einer Fahrbahnschwelle oder in einem Fahrwerk eines Fahrzeugs durch Streusalz und Tauwasser verursacht sein. Um nicht von dem Schlauch bedeckte Teile des Dämpfers vor Korrosion zu schützen, wird der Dämpfer beispielsweise nach dem Anbringen des Schlauchs auf dem Druckrohr in einem Tauchverfahren mit einer Korrosionsschutzbeschichtung versehen.

Der Dämpfer umfasst vorzugsweise Abstandsmittel zur Beabstandung der Bypass-Wand von der Mantelwand. Mit anderen Worten umfasst der Dämpfer einen Abstandshalter.

Durch die Elastizität der Bypass-Wand kann sich die Bypass-Wand an die Mantelwand anlegen, insbesondere wenn die Kolbenstange in einer weit aus dem Druckrohr herausgezogenen Position ist, sodass nur eine geringe Menge der Dämpfflüssigkeit in dem Bypass ist. Dadurch kann der Bypass blockiert werden, sodass die Dämpfflüssigkeit nicht von der vorderen Kammer in die hintere Kammer und zurück strömen kann, sodass der Kolben in dem Druckrohr blockiert wird oder hinter dem Kolben ein Unterdruck entsteht, der dazu führen kann, dass Luft von außen in das Druckrohr einströmt. Diese Probleme werden durch die Abstandsmittel gelöst. Zusätzlich oder alternativ zu den Abstandsmitteln kann die Dämpfflüssigkeit mit einem ausreichend hohen Druck in das Druckrohr und den Bypass gefüllt sein, um zu verhindern, dass sich die Bypass-Wand an die Mantelwand anlegt.

Die Abstandsmittel umfassen vorzugsweise mindestens eine zwischen der Bypass-Wand und der Mantelwand angeordnete, beispielsweise hohlzylindrische, Hülse mit einer Anzahl von Kanälen zur für die Dämpfflüssigkeit leitenden Verbindung der vorderen Kammer mit der hinteren Kammer. Die Kanäle sind beispielsweise von Nuten in einer Oberfläche, insbesondere in einer inneren Oberfläche, der Hülse gebildet. Die Hülse umfasst vorzugsweise eine Anzahl von Durchbrechungen, beispielsweise Bohrungen und/oder Stanzungen, zum Durchtritt der Dämpfflüssigkeit, insbesondere radial zur Hubachse, durch die Hülse. Die Durchbrechungen ermöglichen vorteilhafterweise eine Durchtritt der Dämpfflüssigkeit aus einem Bereich zwischen der Hülse und der Mantelwand, insbesondere aus den Nuten, in einen Bereich zwischen der Hülse und der Bypass-Wand, sodass der Bereich zwischen Hülse und Bypass-Wand als Ausgleichsraum zur Aufnahme von aus dem Druckrohr verdrängter Dämpfflüssigkeit dienen kann. Die Hülse kann vorteilhafterweise unabhängig von Anforderungen, die für die Mantelwand und/oder die Bypass-Wand bestehen, gestaltet werden.

Beispielsweise kann ein Material der Hülse so gewählt werden, dass es besonders elastisch, leicht, kostengünstig und/oder einfach zu bearbeiten ist. Die Hülse besteht vorzugsweise aus einem Elastomer, bevorzugt aus einem thermoplastischen Elastomer, besonders bevorzugt aus einem thermoplastischen Elastomer auf Urethanbasis.

Eine elastische Hülse kann sich vorteilhafterweise an das Volumen der Dämpfflüssigkeit in dem Bypass anpassen und dadurch den Fluss durch den Bypass erhöhen. Wenn die Abstandsmittel von der Hülse gebildet sind, können die Mantelwand und die Bypass-Wand von Standard- Komponenten gebildet sein, um die Herstellungskosten des Dämpfers zu minimieren.

Eine alternative Ausführungsform sieht vor, dass die Abstandsmittel vorzugsweise mindestens eine Strukturierung einer der Mantelwand zugewandten Oberfläche der Bypass-Wand zur Beabstandung der Bypass-Wand von der Mantelwand umfassen. Die Bypass-Wand mit der Strukturierung ist beispielsweise additiv gefertigt, insbesondere durch 3D-Druck. Durch die Ausgestaltung der Abstandsmittel als Strukturierung der Bypass-Wand ist kein separates Bauteil nötig, sodass der Dämpfer besonders einfach zusammengebaut werden kann. Die Strukturierung der Bypass-Wand kann jedoch auch zusätzlich zur vorstehend erwähnten Hülse vorgesehen werden.

Die Strukturierung der der Mantelwand zugewandten Oberfläche der Bypass-Wand umfasst vorzugsweise eine Anzahl von Noppen und/oder eine Anzahl von Nuten zur für die Dämpfflüssigkeit leitenden Verbindung der vorderen Kammer mit der hinteren Kammer. Eine Form, eine Größe und/oder eine Abstand der Noppen voneinander ist vorzugsweise so gewählt, dass sich die Bypass-Wand nicht den Bypass verschließend and die Mantelwand anlegen kann.

Die Anzahl von Nuten der Hülse und/oder der Bypass-Wand umfasst vorzugsweise eine Anzahl von um die Hubachse umlaufenden Umfangsnuten und die Anzahl von Nuten vorzugsweise eine Anzahl von entlang der Hubachse verlaufenden Axialnuten, die mit den Umfangsuten für die Dämpfflüssigkeit leitend verbunden sind. So können die Umfangsnuten Dämpfflüssigkeit, die durch die Öffnungen aus dem Druckrohr austritt, auf die Axialnuten verteilen, sodass alle Axialnuten zur Leitung der Dämpfflüssigkeit von der vorderen Kammer in die hintere Kammer und zurück beitragen.

Der Dämpfer umfasst vorzugsweise eine Anzahl von Öffnungen zur für die Dämpfflüssigkeit leitenden Verbindung der vorderen Kammer und der hinteren Kammer mit dem Bypass.

Die Öffnungen sind vorzugsweise in der Mantelwand ausgebildet. Beispielsweise können die Öffnungen in einfacher Weise als Bohrungen und/oder Stanzungen ausgebildet sein.

Alternativ ist es denkbar, die Öffnungen der beiden Kammern zum Bypass in Verbindungsbauteilen vorzusehen, wobei eine Abdichtung der Verbindungsbauteile zum Druckrohr und zur Bypass-Wand sichergestellt werden muss.

Ebenso ist es denkbar, das Druckrohr mit der Bypass-Wand oder der Hülse zu verschließen und die Öffnungen in einem topfförmigen Bereich der Bypass-Wand oder der Hülse, welcher zum stirnseitigen Verschluss des Druckrohrs vorgesehen ist, anzuordnen.

Die Öffnungen sind vorzugsweise mit den Umfangsnuten für die Dämpfungsflüssigkeit leitend verbunden.

Die Bypass-Wand und/oder die Hülse umfasst vorzugsweise mindestens eine Dichtfläche, wobei die Dichtfläche für die Dämpfungsflüssigkeit dichtend an der Mantelwand befestigt, bevorzugt auf die Mantelwand geklemmt, geklebt, geschweißt und/oder vulkanisiert, ist. Die Dichtfläche ist beispielsweise von einer Schlauchschelle oder von einem Schutzrohr, die oder das die Bypass-Wand und/oder die Hülse an die Mantelwand presst, auf die Mantelwand geklemmt. Die Dichtfläche weist vorzugsweise keine Strukturierung, Kanäle oder Durchbrechungen auf. Die, insbesondere unstrukturierte, Dichtfläche verhindert vorteilhafterweise, dass die Dämpfflüssigkeit zwischen der Bypass-Wand und/oder der Hülse und der Mantelwand aus dem Bypass austritt.

Die Bypass-Wand besteht vorzugsweise aus einem Elastomer, bevorzugt aus einem thermoplastischen Elastomer, besonders bevorzugt aus einem thermoplastischen Elastomer auf Urethanbasis. Ein Elastomer, beispielsweise ein Vulkanisat von Naturkautschuk oder Silikonkautschuk, insbesondere von Acrylnitril-Butadien-Kautschuk, kann vorteilhafterweise die notwendige Elastizität der Bypass-Wand bereitstellen. Ein thermoplastisches Elastomer hat den zusätzlichen Vorteil, dass es unter Erhitzung plastisch verformt werden kann, um eine Strukturierung einer Oberfläche der Bypass- Wand herzustellen. Insbesondere kann die Bypass-Wand mit der Strukturierung durch ein additives Verfahren, beispielsweise durch 3D- Drucken, aus einem thermoplastischen Elastomer gefertigt werden. Ein thermoplastisches Elastomer auf Urethanbasis und ein Vulkanisat von Acrylnitril-Butadien-Kautschuk bieten den Vorteil einer hohen chemischen Beständigkeit. Die Bypass-Wand hat beispielsweise eine Shore-A-Härte von 95.

Der Dämpfer umfasst vorzugsweise mindestens ein Bodenventil zur Regulierung einer Strömung der Dämpfungsflüssigkeit zwischen der vorderen Kammer und dem Bypass, wobei das Bodenventil einen von einer Strömungsrichtung und/oder von einer Strömungsgeschwindigkeit der Strömung abhängigen Strömungswiderstand der Strömung bewirkt.

Das Bodenventil ist beispielsweise so ausgestaltet, dass es für eine Strömung von dem Bypass in die vordere Kammer und für eine Strömung von der vorderen Kammer in den Bypass mit einer Strömungsgeschwindigkeit kleiner als eine Schaltgeschwindigkeit einen geringen Strömungswiderstand bewirkt und für eine Strömung von der vorderen Kammer in den Bypass mit einer Strömungsgeschwindigkeit größer oder gleich der Schaltgeschwindigkeit einen hohen Strömungswiderstand bewirkt, insbesondere die Strömung blockiert. Dadurch dämpft der Dämpfer eine langsame Einschubbewegung der Kolbenstange in das Druckrohr und eine Ausschubbewegung der Kolbenstange aus dem Druckrohr mit einer geringen Dämpfkraft und eine schnelle Einschubbewegung der Kolbenstange in das Druckrohr mit einer hohen Dämpfkraft. Eine solche geschwindigkeitsabhängige und richtungsabhängige Dämpfkraft ist besonders vorteilhaft zur Dämpfung einer Bewegung einer Fahrbahnschwelle wie in US 2019/106849 A1 oder DE 10 2020 109 215 A1.

Der Dämpfer umfasst vorzugsweise mindestens einen Überlastkanal durch den Kolben, der die vordere Kammer für die Dämpfungsflüssigkeit leitend mit der hinteren Kammer verbindet; und ein Überlastventil, das den Überlastkanal verschließt, wenn ein Differenzdruck zwischen der vorderen Kammer und der hinteren Kammer kleiner als ein Überlastdruck ist, und den Überlastkanal freigibt, wenn der Differenzdruck größer oder gleich dem Überlastdruck ist.

Bei einer schnellen Bewegung des Kolbens in dem Druckrohr, beispielsweise durch ein schnelles Einschieben der Kolbenstange in das Druckrohr, bewirkt das Bodenventil vorzugsweise einen hohen Strömungswiderstand auf die Strömung der Dämpfflüssigkeit in den Bypass oder blockiert diese vollständig, sodass der Kolben gebremst oder angehalten wird. Wenn in diesem Zustand eine große Kraft über die Kolbenstange in den Dämpfer eingeleitet wird, bewirkt die Kraft einen hohen Differenzdruck, wodurch auf der Niederdruckseite des Kolbens Luft von außen in das Druckrohr einströmen kann. Außerdem kann die Kraft den Dämpfer oder damit verbundene Komponenten in dem Zustand mit blockiertem Kolben beschädigen. Der Überlastkanal mit Überlastventil erlaubt bei einem Differenzdruck oberhalb des Überlastdrucks einen Austausch von Dämpfflüssigkeit zwischen der vorderen Kammer und der hinteren Kammer, sodass eine Bewegung des Kolbens ermöglicht wird und der Differenzdruck abgebaut wird., sodass der Dämpfer und damit verbundene Komponenten nicht beschädigt werden.

Der Dämpfer umfasst vorzugsweise ein Federelement, beispielsweise eine Schraubenfeder, wobei das Federelement zur Unterstützung eines Ausschubs der Kolbenstange aus dem Druckrohr mit dem Kolben und/oder mit der Kolbenstange und mit dem Druckrohr verbunden ist. Wenn der Dämpfer kein solches Federelement aufweist, kann der Ausschub der Kolbenstange allein durch die elastische Rückstellkraft der Bypass-Wand bewirkt werden, die die Dämpfflüssigkeit aus dem Bypass zurück in das Druckrohr drückt, sodass die Kolbenstange aus dem Druckrohr ausgeschoben wird. Wenn die Rückstellkraft der Bypass-Wand für den Ausschub nicht ausreicht, beispielsweise weil die Kolbenstange eine schwere Fahrbahnschwelle trägt, kann das Federelement den Ausschub sicherstellen.

Das Verfahren zur Herstellung des Dämpfers umfasst ein Bereitstellen eines Druckrohrs zur Aufnahme einer Dämpfflüssigkeit. Zu dem Dämpfer beschriebene Ausgestaltungsmöglichkeiten und Vorteile gelten auch für das Verfahren entsprechend.

Das Verfahren umfasst ein Befestigen einer Kolbenstange an einem Kolben.

Das Verfahren umfasst ein Anordnen des Kolbens in dem Druckrohr, sodass der Kolben entlang einer Hubachse verschieblich gelagert ist und das Druckrohr in eine vordere Kammer entlang der Hubachse vor dem Kolben und eine hintere Kammer entlang der Hubachse hinter dem Kolben teilt, wobei die Kolbenstange durch die hintere Kammer entlang der Hubachse aus dem Druckrohr herausgeführt ist.

Das Verfahren umfasst ein Anordnen eines Bypass außerhalb des Druckrohrs, sodass der Bypass die vordere Kammer für die Dämpfflüssigkeit leitend mit der hinteren Kammer verbindet, wobei der Bypass zumindest abschnittsweise von einer Bypass-Wand begrenzt ist, die zur Aufnahme eines von der Kolbenstange bei einem Einschieben der Kolbenstange in das Druckrohr verdrängten Volumens der Dämpfflüssigkeit in den Bypass (140) elastisch verformbar ist.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind.
Figur 1 zeigt schematisch eine erfindungsgemäße Ausgestaltung des Dämpfers mit teilweise eingeschobener Kolbenstange.
Figur 2 zeigt schematisch die Ausgestaltung des Dämpfers aus Figur 1 mit ausgeschobener Kolbenstange.
Figur 3 zeigt beispielhaft eine Bypass-Wand eines erfindungsgemäßen Dämpfers.
Figur 4 zeigt beispielhaft eine Hülse eines erfindungsgemäßen Dämpfers.

### Fig.1

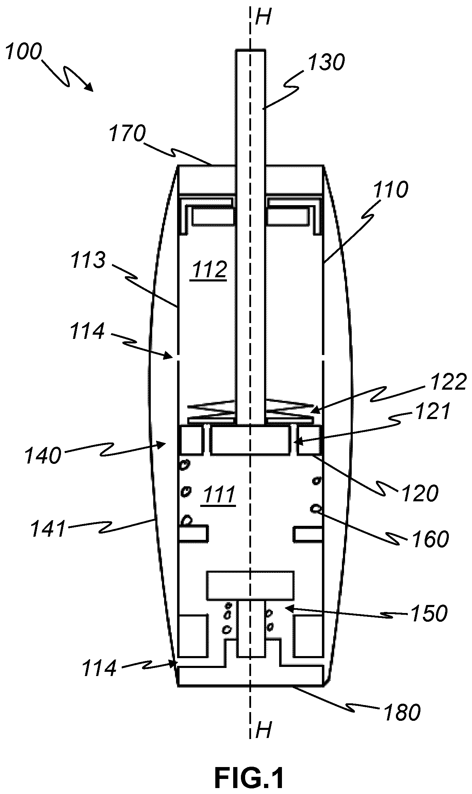

Figur 1 zeigt schematisch eine erfindungsgemäße Ausgestaltung des Dämpfers 100 mit teilweise in das Druckrohr 110 des Dämpfers 100 eingeschobener Kolbenstange 130 als schematischen Längsschnitt entlang der Hubachse H des Dämpfers 100.

Der gezeigte Dämpfer 100 umfasst ein mit einer Dämpfflüssigkeit (nicht dargestellt) gefülltes Druckrohr 110 und einen in dem Druckrohr 110 entlang einer Hubachse H verschieblich gelagerten Kolben 120, wobei der Kolben 120 das Druckrohr 110 in eine vordere Kammer 111 entlang der Hubachse H vor dem Kolben 120 und eine hintere Kammer 112 entlang der Hubachse H hinter dem Kolben 120 teilt.

Der gezeigte Dämpfer 100 umfasst eine an dem Kolben 120 befestigte Kolbenstange 130, wobei die Kolbenstange 130 durch die hintere Kammer 112 und durch eine Führungs-Dichtungs-Einheit 170 entlang der Hubachse H aus dem Druckrohr 110 herausgeführt ist. Die Führungs-Dichtungs-Einheit 170 verschließt ein Ende des Druckrohrs 110 für die Dämpfflüssigkeit dicht. An dem der Führungs-Dichtungs-Einheit 170 entlang der Hubachse H gegenüberliegenden Ende des Druckrohrs 110 ist das Druckrohr 110 mit einem Verschlusselement 180 für die Dämpfflüssigkeit dicht verschlossen.

Der gezeigte Dämpfer 100 umfasst einen außerhalb des Druckrohrs 110 angeordneten Bypass 140, wobei der Bypass 140 die vordere Kammer 111 für die Dämpfflüssigkeit leitend mit der hinteren Kammer 112 verbindet. Dafür umfasst der Dämpfer 100 jeweils eine Anzahl von Öffnungen 114 durch eine Mantelwand 113 des Druckrohrs 110 zur für die Dämpfflüssigkeit leitenden Verbindung der vorderen Kammer 111 und der hinteren Kammer 112 mit dem Bypass 140.

Der Bypass 140 ist abschnittsweise von einer Bypass-Wand 141 begrenzt. In dem in Figur 1 gezeigten Zustand des Dämpfers 100 ist die Bypass-Wand 141 durch die Aufnahme eines von der Kolbenstange 130 bei einem Einschieben der Kolbenstange 130 in das Druckrohr 110 verdrängten Volumens der Dämpfflüssigkeit in den Bypass 140 elastisch von der Hubachse H radial nach außen verformt.

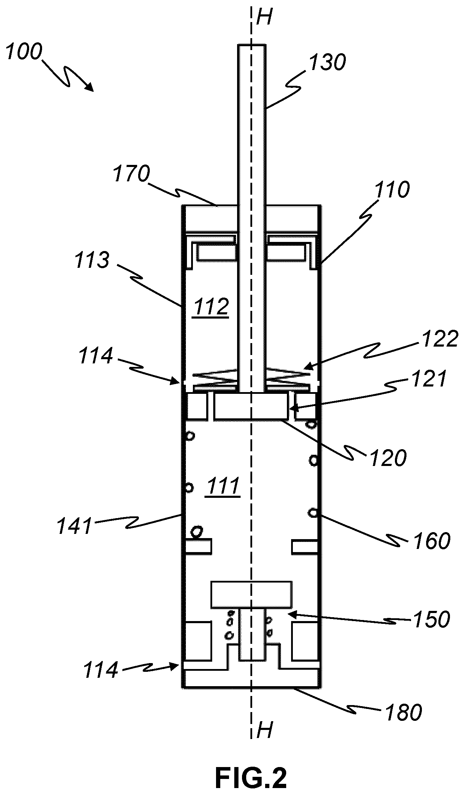

Die Bypass-Wand 141 ist von einem Schlauch gebildet, wobei das Druckrohr 110 so in dem Schlauch angeordnet ist, dass der Bypass 141 zwischen der Mantelwand 113 und dem Schlauch verläuft. Die Bypass-Wand 141 ist nahezu über ihre gesamte Länge direkt oder indirekt an die Mantelwand 113 anlegbar (siehe Figur 2) und bildet eine Außenwand des Dämpfers 100.

An den Enden des Druckrohrs 110 entlang der Hubachse ist die von dem Schlauch gebildete Bypass-Wand 141 jeweils auf der Mantelwand 113 für die Dämpfflüssigkeit dicht befestigt, dass die Dämpfflüssigkeit nicht aus dem Bypass 140 in eine Umgebung des Dämpfers 100 austreten kann.

Der gezeigte Dämpfer 100 umfasst ein Bodenventil 150 zur Regulierung einer Strömung der Dämpfungsflüssigkeit zwischen der vorderen Kammer 111 und dem Bypass 140, wobei das Bodenventil 150 einen von einer Strömungsrichtung und von einer Strömungsgeschwindigkeit der Strömung abhängigen Strömungswiderstand der Strömung bewirkt.

Der gezeigte Dämpfer 100 umfasst mindestens einen Überlastkanal 121 durch den Kolben 120, der die vordere Kammer 111 für die Dämpfungsflüssigkeit leitend mit der hinteren Kammer 112 verbindet, und ein Überlastventil 122, das den Überlastkanal 121 verschließt, wenn ein Differenzdruck zwischen der vorderen Kammer 111 und der hinteren Kammer 112 kleiner als ein Überlastdruck ist, und den Überlastkanal 121 freigibt, wenn der Differenzdruck größer oder gleich dem Überlastdruck ist.

Der gezeigte Dämpfer 100 umfasst ein Federelement 160, beispielsweise eine Schraubenfeder, wobei das Federelement 160 zur Unterstützung eines Ausschubs der Kolbenstange 130 aus dem Druckrohr 110 mit dem Kolben 120 und mit dem Druckrohr 110 verbunden ist.

### Fig.2

Figur 2 zeigt schematisch die Ausgestaltung des Dämpfers 100 aus Figur 1 mit aus dem Druckrohr 110 ausgeschobener Kolbenstange 130 als schematischen Längsschnitt entlang der Hubachse H des Dämpfers 100.

Da die Kolbenstange 130 aus dem Druckrohr 110 ausgeschoben ist, befindet sich das Volumen der Dämpfflüssigkeit, das in dem in Figur 1 gezeigten Zustand des Dämpfers 100 in dem Bypass 140 war, in dem in Figur 2 gezeigten Zustand des Dämpfers 100 in dem Druckzylinder 110. Dadurch hat sich die Bypass-Wand 141 elastisch radial auf die Hubachse H zu zurückgestellt, sodass die Bypass-Wand 141 an der Mantelwand 113 des Druckzylinders 110 anliegt.

Damit das Dämpfungsfluid dennoch durch die Öffnungen 114 in der Mantelwand 113 und durch den Bypass (nicht sichtbar) von der vorderen Kammer 111 in die hintere Kammer 112 und zurück strömen kann, weist eine der Mantelwand 113 zugewandte Oberfläche der Bypass-Wand 141 beispielsweise eine Strukturierung (nicht dargestellt) als Abstandsmittel bzw. Abstandshalter auf, durch die das Dämpfungsfluid zwischen der Mantelwand 113 und der Bypass-Wand 141 hindurchströmen kann.

### Fig.3

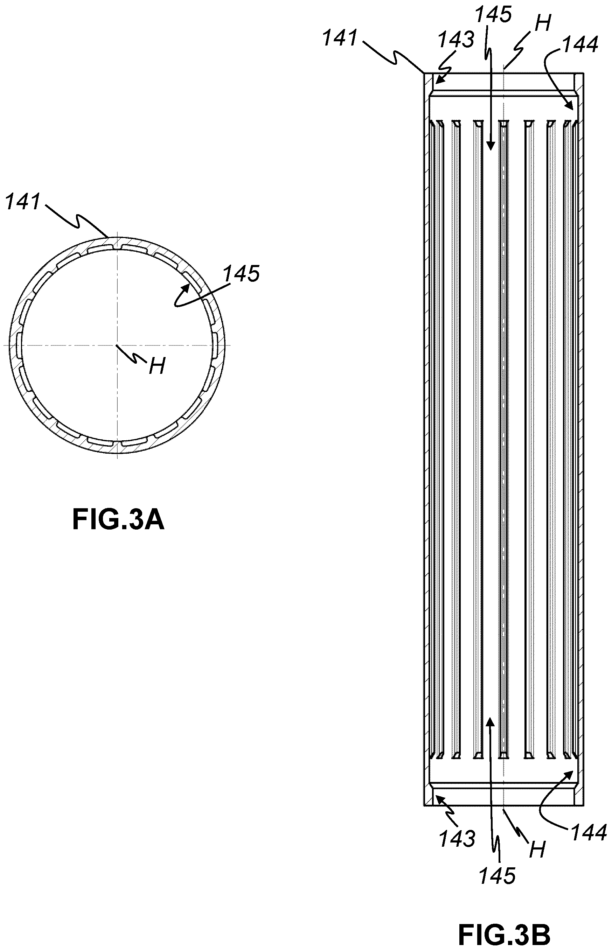

Figur 3 zeigt beispielhaft eine Bypass-Wand 141 eines erfindungsgemäßen Dämpfers 100 als Querschnitt quer zur Hubachse H des Dämpfers 100 (Fig.3A) und als Längsschnitt entlang der Hubachse H (Fig. 3B). Die Bypass-Wand 141 ist beispielsweise als Schlauch, insbesondere aus einem Elastomer, ausgestaltet und/oder hohlzylindrisch geformt und/oder koaxial zur Hubachse H angeordnet. Weitere Komponenten des Dämpfers 100 sind in Figur 3 der Übersichtlichkeit halber nicht gezeigt.

Die gezeigte Bypass-Wand 141 umfasst eine Strukturierung einer der Mantelwand 113 des Druckrohrs 110 (nicht gezeigt) des Dämpfers 100 zugewandten Oberfläche, insbesondere einer inneren Oberfläche, der Bypass-Wand 141 zur Beabstandung der Bypass-Wand 141 von der Mantelwand 113.

Die Strukturierung der der Mantelwand 113 zugewandten Oberfläche der Bypass-Wand 141 umfasst eine Anzahl von Nuten zur für die Dämpfflüssigkeit leitenden Verbindung der vorderen Kammer 111 des Druckrohrs 110 des Dämpfers 100 mit der hinteren Kammer 112 des Druckrohrs 110, wobei die Strukturierung Druckrohrs 110, wobei die Strukturierung als Abstandsmittel bzw. Abstandshalter zur Beabstandung der Bypass-Wand 141 von der Mantelwand 113 dient.

Die Anzahl von Nuten der Bypass-Wand 141 umfasst eine Anzahl von um die Hubachse H umlaufenden Umfangsnuten 144, wobei die Umfangsnuten 144 vorzugsweise mit Öffnungen durch die Mantelwand 113 zur für die Dämpfflüssigkeit leitenden Verbindung der vorderen Kammer 111 und/oder der hinteren Kammer 112 mit dem Bypass für die Dämpfflüssigkeit leitend verbunden sind. Beispielsweise weist die Bypass-Wand 141 nahe eines ersten Endes der Bypass-Wand 141 eine erste Umfangsnut 144 auf, die über Öffnungen durch die Mantelwand 113 mit der vorderen Kammer 111 verbunden ist, und nahe eines zweiten Endes der Bypass-Wand 141 eine zweite Umfangsnut 144, die über Öffnungen durch die Mantelwand 113 mit der hinteren Kammer 112 verbunden ist. Die Anzahl von Nuten umfasst eine Anzahl, insbesondere eine Vielzahl, von entlang der Hubachse H verlaufenden Axialnuten 145, die mit den Umfangsnuten 144 für die Dämpfflüssigkeit leitend verbunden sind.

Die Bypass-Wand 141 umfasst mindestens eine Dichtfläche 143, insbesondere an ihren Enden jeweils eine Dichtfläche 143. Die Dichtfläche
143 ist für die Dämpfungsflüssigkeit dichtend an der Mantelwand 113 befestigt und weist keine Strukturierung auf.

### Fig.4

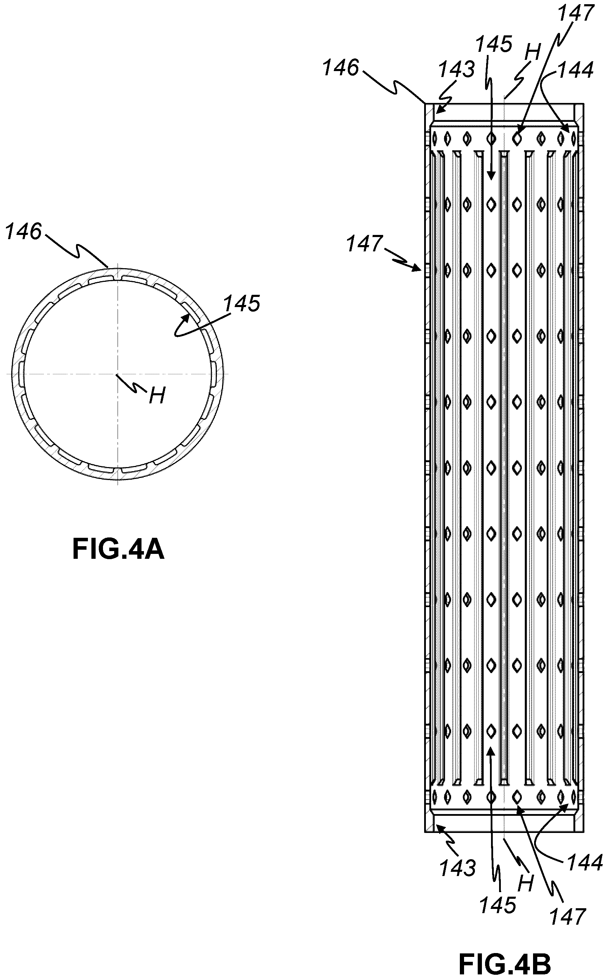

Figur 4 zeigt beispielhaft eine Hülse 146 eines erfindungsgemäßen Dämpfers 100 als Querschnitt quer zur Hubachse H des Dämpfers 100 (Fig.4A) und als Längsschnitt entlang der Hubachse H (Fig. 4B). Die Hülse
146 ist beispielsweise hohlzylindrisch geformt und/oder koaxial zur Hubachse H angeordnet. Weitere Komponenten des Dämpfers 100 sind in Figur 4 der Übersichtlichkeit halber nicht gezeigt.

Die Hülse 146 umfasst eine Anzahl von Kanälen, beispielsweise eine Anzahl von Nuten, insbesondere in einer inneren Oberfläche der Hülse 146, zur für die Dämpfflüssigkeit leitenden Verbindung der vorderen Kammer 111 des Druckrohrs 110 des Dämpfers 100 mit der hinteren Kammer 112 des Druckrohrs 110. Die als Abstandsmittel bzw. Abstandshalter zwischen der Bypass-Wand 141 und der Mantelwand 113 dienende Hülse 146 weist eine Anzahl, insbesondere eine Vielzahl, von Durchbrechungen 147 zum Durchtritt der Dämpfflüssigkeit durch die Hülse 146 auf.

Die Anzahl von Nuten der Hülse 146 umfasst eine Anzahl von um die Hubachse H umlaufenden Umfangsnuten 144, wobei die Umfangsnuten 144 vorzugsweise mit Öffnungen durch die Mantelwand 113 des Druckrohrs 110 des Dämpfers 100 zur für die Dämpfflüssigkeit leitenden Verbindung der vorderen Kammer 111 und/oder der hinteren Kammer 112 mit dem Bypass für die Dämpfflüssigkeit leitend verbunden sind. Beispielsweise weist die Hülse 146 nahe eines ersten Endes der Hülse 146 eine erste Umfangsnut 144 auf, die über Öffnungen durch die Mantelwand 113 mit der vorderen Kammer 111 verbunden ist, und nahe eines zweiten Endes der Hülse 146 eine zweite Umfangsnut 144, die über Öffnungen durch die Mantelwand 113 mit der hinteren Kammer 112 verbunden ist.

Die Anzahl von Nuten umfasst eine Anzahl, insbesondere eine Vielzahl, von entlang der Hubachse H verlaufenden Axialnuten 145, die mit den Umfangsnuten 144 für die Dämpfflüssigkeit leitend verbunden sind.

Die Hülse 146 umfasst mindestens eine Dichtfläche 143, insbesondere an ihren Enden jeweils eine Dichtfläche 143. Die Dichtfläche 143 ist für die Dämpfungsflüssigkeit dichtend an der Mantelwand 113 befestigt und weist keine Kanäle oder Durchbrechungen auf.

Eine nicht gezeigte Ausführungsform sieht vor, die vorstehend beschriebenen Öffnungen 114 nicht der Mantelwand 113 anzuordnen, sondern in einem nicht dargestellten Verbindungsbauteil, mittels welchem die Bypass-Wand 141 und/oder die Hülse 146 mit dem Druckrohr 110 dichtend verbunden sind.

Alternativ ist es auch denkbar, die Öffnungen in die Führungs-Dichtungs-Einheit 170 bzw. das Verschlusselement 180 zu integrieren. Dabei ist sicherzustellen, dass die dichtende Befestigung der Bypass-Wand 114 entsprechend ausgebildet ist.

Eine weitere alternative Ausführungsform der Erfindung sieht vor, dass die Bypass-Wand oder die vorstehend beschriebene Hülse die Funktion eines Verschlusselementes für das Druckrohr 110 übernimmt. Dazu ist eine Stirnseite der Bypass-Wand oder der Hülse topfförmig ausgebildet und verschließt das Druckrohr 110 dichtend. Ein separates Verschlusselement 180 kann in diesen Fall entfallen.

Dementsprechend können Öffnungen zur fluidleitenden Verbindung zwischen der vorderen Kammer mit dem Bypass 140 im topfförmigen Bereich der Bypass-Wand bzw. der Hülse angeordnet werden.

## Patentansprüche

1. Dämpfer (100) umfassend
a. ein mit einer Dämpfflüssigkeit gefülltes Druckrohr (110);
b. einen in dem Druckrohr (110) entlang einer Hubachse (H) verschieblich gelagerten Kolben (120), wobei der Kolben (120) das Druckrohr (110) in eine vordere Kammer (111) entlang der Hubachse (H) vor dem Kolben (120) und eine hintere Kammer (112) entlang der Hubachse (H) hinter dem Kolben (120) teilt;
c. eine an dem Kolben (120) befestigte Kolbenstange (130), wobei die Kolbenstange (130) durch die hintere Kammer (112) entlang der Hubachse (H) aus dem Druckrohr (110) herausgeführt ist; und
d. einen außerhalb des Druckrohrs (110) angeordneten Bypass (140), wobei der Bypass (140) die vordere Kammer (111) für die Dämpfflüssigkeit leitend mit der hinteren Kammer (112) verbindet;
wobei
e. der Bypass (140) zumindest abschnittsweise von einer um die Hubachse (H) umlaufenden Mantelwand (113) des Druckrohrs (110) und zumindest abschnittsweise von einer Bypass-Wand (141) begrenzt ist, wobei die Bypass-Wand (141) zur Aufnahme eines von der Kolbenstange (130) bei einem Einschieben der Kolbenstange (130) in das Druckrohr (110) verdrängten Volumens der Dämpfflüssigkeit in den Bypass (140) elastisch verformbar ist.

2. Dämpfer (100) nach Anspruch 1,
wobei die Bypass-Wand (141) von einem Schlauch gebildet ist.

3. Dämpfer (100) nach Anspruch 2,
wobei das Druckrohr (110) in dem Schlauch angeordnet ist, sodass der Bypass (140) zwischen der Mantelwand (113) und dem Schlauch verläuft.

4. Dämpfer (100) nach Anspruch 2 oder 3,
wobei der Dämpfer (100) Abstandsmittel zur Beabstandung der Bypass-Wand (141) von der Mantelwand (113) umfasst.

5. Dämpfer (100) nach Anspruch 4,
wobei die Abstandsmittel eine zwischen der Bypass-Wand (141) und der Mantelwand (113) angeordnete Hülse (146) mit einer Anzahl von Kanälen, bevorzugt eine Anzahl von Nuten, zur für die Dämpfflüssigkeit leitenden Verbindung der vorderen Kammer (111) mit der hinteren Kammer (112) umfassen, wobei die Hülse (146) bevorzugt eine Anzahl von Durchbrechungen (147) zum Durchtritt der Dämpfflüssigkeit durch die Hülse (146) aufweist.

6. Dämpfer (100) nach Anspruch 4 oder 5,
wobei die Abstandsmittel eine Strukturierung einer der Mantelwand (113) zugewandten Oberfläche der Bypass-Wand (141) zur Beabstandung der Bypass-Wand (141) von der Mantelwand (113) umfassen.

7. Dämpfer (100) nach Anspruch 6,
wobei die Strukturierung der der Mantelwand (113) zugewandten Oberfläche der Bypass-Wand (141) eine Anzahl von Noppen und/oder eine Anzahl von Nuten zur für die Dämpfflüssigkeit leitenden Verbindung der vorderen Kammer (111) mit der hinteren Kammer (112) umfasst.

8. Dämpfer (100) nach Anspruch 5 oder 7,
wobei die Anzahl von Nuten der Bypass-Wand (141) und/oder der Hülse (146) eine Anzahl von um die Hubachse (H) umlaufenden Umfangsnuten (144) umfasst, und wobei die Anzahl von Nuten eine Anzahl von entlang der Hubachse (H) verlaufenden Axialnuten (145) umfasst, die mit den Umfangsnuten (144) für die Dämpfflüssigkeit leitend verbunden sind.

9. Dämpfer (100) nach einem der Ansprüche 1 bis 8, wobei
der Dämpfer (100) eine Anzahl von Öffnungen (114) zur für die Dämpfflüssigkeit leitenden Verbindung der vorderen Kammer (111) und der hinteren Kammer (112) mit dem Bypass (140) umfasst.

10. Dämpfer (100) nach Anspruch 8,
wobei die Öffnungen (114) in der Mantelwand (113) ausgebildet sind.

11. Dämpfer (100) nach Anspruch 9 oder 10,
wobei die Öffnungen (114) mit den Umfangsnuten (144) für die Dämpfflüssigkeit leitend verbunden sind.

12. Dämpfer (100) nach einem der vorangegangenen Ansprüche 1 bis 11,
wobei die Bypass-Wand (141) eine Dichtfläche
(143) umfasst,
a. wobei die Dichtfläche (143) für die Dämpfungsflüssigkeit dichtend an der Mantelwand (113) befestigt, bevorzugt auf die Mantelwand (113) geklemmt, geklebt, geschweißt und/oder vulkanisiert, ist; und
b. wobei die Dichtfläche (143) keine Strukturierung, Kanäle oder Durchbrechungen aufweist.

13. Dämpfer (100) nach Anspruch 5 und einem der Ansprüche 6 bis 11,
wobei die Bypass-Wand (141) und/oder die Hülse (146) eine Dichtfläche (143) umfasst,
a. wobei die Dichtfläche (143) für die Dämpfungsflüssigkeit dichtend an der Mantelwand (113) befestigt, bevorzugt auf die Mantelwand (113) geklemmt, geklebt, geschweißt und/oder vulkanisiert, ist; und
b. wobei die Dichtfläche (143) keine Strukturierung, Kanäle oder Durchbrechungen aufweist.

14. Dämpfer (100) nach einem der Ansprüche 1 bis 13,
wobei die Bypass-Wand (141) aus einem Elastomer, bevorzugt aus einem thermoplastischen Elastomer, besonders bevorzugt aus einem thermoplastischen Elastomer auf Urethanbasis, besteht.

15. Dämpfer (100) nach einem der Ansprüche 1 bis 14,
wobei der Dämpfer (100) ein Bodenventil (150) zur Regulierung einer Strömung der Dämpfungsflüssigkeit zwischen der vorderen Kammer (111) und dem Bypass (140) umfasst, wobei das Bodenventil (150) einen von einer Strömungsrichtung und/oder von einer Strömungsgeschwindigkeit der Strömung abhängigen Strömungswiderstand der Strömung bewirkt.

16. Dämpfer (100) nach einem der Ansprüche 1 bis 15,
wobei der Dämpfer (100)
a. einen Überlastkanal (121) durch den Kolben (120) umfasst, der die vordere Kammer (111) für die Dämpfungsflüssigkeit leitend mit der hinteren Kammer (112) verbindet; und
b. ein Überlastventil (122) umfasst, das den Überlastkanal (121) verschließt, wenn ein Differenzdruck zwischen der vorderen Kammer (111) und der hinteren Kammer (112) kleiner als ein Überlastdruck ist, und den Überlastkanal (121) freigibt, wenn der Differenzdruck größer oder gleich dem Überlastdruck ist.

17. Dämpfer (100) nach einem der Ansprüche 1 bis 16,
wobei der Dämpfer (100) ein Federelement (160) umfasst, wobei das Federelement (160) zur Unterstützung eines Ausschubs der Kolbenstange
(130) aus dem Druckrohr (110) mit dem Kolben (120) und/oder mit der Kolbenstange (130) und mit dem Druckrohr (110) verbunden ist.

18. Verfahren zur Herstellung eines Dämpfers (100) nach einem der Ansprüche 1 bis 17 umfassend folgende Schritte:
a. Bereitstellen eines Druckrohrs (110) zur Aufnahme einer Dämpfflüssigkeit;
b. Befestigen einer Kolbenstange (130) an einem Kolben (120)
c. Anordnen des Kolbens (120) in dem Druckrohr (110), sodass der Kolben (120) entlang einer Hubachse (H) verschieblich gelagert ist und das Druckrohr (110) in eine vordere Kammer (111) entlang der Hubachse (H) vor dem Kolben (120) und eine hintere Kammer (112) entlang der Hubachse (H) hinter dem Kolben (120) teilt, wobei die Kolbenstange (130) durch die hintere Kammer (112) entlang der Hubachse (H) aus dem Druckrohr (110) herausgeführt ist; und
d. Anordnen eines Bypass (140) außerhalb des Druckrohrs (110), sodass der Bypass (140) die vordere Kammer (111) für die Dämpfflüssigkeit leitend mit der hinteren Kammer (112) verbindet, wobei der Bypass(140) zumindest abschnittsweise von einer Bypass-Wand (141) begrenzt ist, die zur Aufnahme eines von der Kolbenstange (130) bei einem Einschieben der Kolbenstange (130) in das Druckrohr (110) verdrängten Volumens der Dämpfflüssigkeit in den Bypass (140) elastisch verformbar ist.
